# EUROPÄISCHE PATENTSCHRIFT

(11) **EP 4 605 262 B1**
(45) Veröffentlichungstag und Bekanntmachung des Hinweises auf die Patenterteilung: **23.09.2026**
(21) Anmeldenummer: 23757864.6
(22) Anmeldetag: 11.08.2023
(51) Int. Cl.: B60L 53/16, H01R 31/06, B60L 53/31, B60L 53/10, B60L 53/35, B60L 53/66, B60L 53/65, H01R 27/00, H01R 13/00, H01R 24/00

(54) **LADEVORRICHTUNG MIT ADAPTER-STECKER-MAGAZIN**
CHARGING APPARATUS WITH ADAPTER-PLUG MAGAZINE
DISPOSITIF DE CHARGE AVEC MAGASIN D'ADAPTATEURS-CONNECTEURS

(30) Priorität: 21.10.2022 DE 102022127903
(43) Veröffentlichungstag der Anmeldung: 27.08.2025
(73) Patentinhaber: Bayerische Motoren Werke Aktiengesellschaft, 80809 München (DE)
(72) Erfinder: BUSCH, Clemens, 85737 Ismaning (DE); BUETTNER, Florian, 93101 Pfakofen (DE)
(86) Internationale Anmeldenummer: PCT/EP2023/072285
(87) Internationale Veröffentlichungsnummer: WO 2024/083382

(56) Entgegenhaltungen:
- DE-A1- 102019 102 281
- DE-A1- 102020 202 533
- GB-A- 2 599 501
- US-A1- 2018 086 217
- US-A1- 2020 180 456
- US-A1- 2022 219 559

## Beschreibung

Die Erfindung betrifft eine Ladevorrichtung zum Laden von elektrisch angetriebenen, Lasten und/oder Personen befördernden Fahrzeugen.

Im Folgenden wird der Begriff "Fahrzeug" synonym zum Begriff "elektrisch angetriebenes Fahrzeug" verwendet. Davon sind auch "zumindest teilweise elektrisch angetriebene Fahrzeuge" umfasst.

Um fahrbereit zu sein, müssen elektrisch angetriebene Fahrzeuge in regelmäßigen Abständen aufgeladen werden. Dafür wird ein solches Fahrzeug üblicherweise mit einer Ladevorrichtung gekoppelt, um die Batterien des Fahrzeugs mit elektrischer Energie zu versorgen und damit aufzuladen. Eine Grundvoraussetzung für das Laden von Fahrzeugen an einer Ladevorrichtung ist, dass die Ladevorrichtung und das Fahrzeug dasselbe Ladesystem aufweisen, also kompatibel zueinander sind. Aus dem Stand der Technik sind eine Vielzahl verschiedener Ladesysteme bekannt. Die bekanntesten Ladesysteme sind Typ-1, Typ-2 Mennekes, Combined AC / DC Charging System (nachfolgend "CCS" genannt), Typ-F, Commission on the Rules for the Approval of the Electrical Equipment (nachfolgend "CEE" genannt), Charge de Mode (nachfolgend "ChadeMo" genannt) und der Tesla Supercharger. Zusätzlich zu den genannten Ladesystemen gibt es noch eine Vielzahl weiterer Ladesysteme sowie herstellerbedingte Eigenarten davon.

Die US 2020/0180456 A1 beschreibt eine aus dem Boden ausfahrbare Ladevorrichtung, die am Unterboden eines elektrisch angetriebenen Fahrzeugs ankoppelt.

In der US 2018/086217 A1 wird eine an einem elektrisch angetriebenen Fahrzeug eingerichtete Ladeinterface-Einheit mit einer mechanischen Verriegelung gezeigt.

Die US 2022/0219559 A1 beschreibt eine Schnellladevorrichtung und Methode zum Laden von elektrisch angetriebenen Landfahrzeugen, Wasserfahrzeugen, Luftfahrzeugen und/oder Arbeitsmaschinen und/oder Batterien.

In der GB 2 599 501 A wird eine DC-Ladevorrichtung für elektrisch angetriebene Fahrzeuge mit einem DC-Ladeanschluss und einem zusätzlich entriegelbaren AC-Ladeanschluss gezeigt.

Die DE 10 2020 202533 A1 beschreibt ein Ladesystem und Verfahren zum autonomen Laden eines elektrisch angetriebenen Fahrzeugs.

In der DE 10 2019 102281 A1 wird eine Multi-Ladesäule mit wenigstens zwei Ladekabeln und wenigstens zwei Ladekontrollen für ein elektrisch angetriebenes Fahrzeug gezeigt.

Aufgrund der Vielzahl der am Markt angebotenen Ladesysteme ist nicht jedes Fahrzeug mit jeder Ladevorrichtung kompatibel. Dies beschränkt die Auswahl an Ladevorrichtungen erheblich ein, an der ein Fahrzeug aufgeladen werden kann. Die Suche nach einer geeigneten Ladevorrichtung für das Fahrzeug ist somit oft zeitaufwendig und schränkt die Mobilität bzw. die Reichweite des Fahrzeugs ein.

Ein Vorschlag das vorgenannte Problem zu überwinden, ist das Verwenden von sogenannten Adaptersteckern, welche eine Kompatibilität von einer Ladevorrichtung zu einem elektrisch angetriebenen Fahrzeug herstellen, die ansonsten nicht miteinander koppelbar wären. Allerdings sind solche Adapterstecker oftmals darauf beschränkt, eine Kompatibilität zwischen zwei spezifischen Ladesystemen herzustellen. Dies schränkt die Verwendung solcher Adapterstecker erheblich ein, da eine Vielzahl von Adaptersteckern gekauft und mitgeführt werden muss.

Insofern ist es die Aufgabe der vorliegenden Erfindung, die Nachteile aus dem Stand der Technik zu beseitigen, und eine Vorrichtung bereitzustellen, mit der ein elektrisch angetriebenes Fahrzeug auf einfache Weise geladen werden kann.

Die Aufgabe wird erfindungsgemäß gelöst durch eine Ladevorrichtung zum Laden von elektrisch angetriebenen, Lasten und/oder Personen befördernden Fahrzeugen, nach dem unabhängigen Anspruch 1.

Vorteilhafte Ausführungsvarianten sind in den abhängigen Ansprüchen beschrieben.

Ein Adapter-Stecker-Magazin als rotierendes Trommelmagazin kann auf einfache Weise eine Vielzahl von Adapter-Steckern bevorraten und bei Bedarf einen Adapter-Stecker aus dem Vorrat ausgeben.

Ein Adapter-Stecker-Magazin als Umlaufsystem ist auch als ein "Paternoster" bekannt. Ein solches System erlaubt auf einfache Weise, eine Vielzahl von Adapter-Steckern aufzunehmen, zu bevorraten und bei Bedarf über die gemeinsame Entnahme- und Beschickungsöffnung auszugeben.

Die Erfindung beruht auf dem Grundgedanken, eine Vielzahl von verschiedenen Adapter-Steckern bereits an der Ladevorrichtung zur Verfügung zu stellen. Die erfindungsgemäße Ladevorrichtung ist somit in der Lage, Fahrzeuge mit unterschiedlichen Ladesystemen aufzuladen, da mithilfe des in der Ladevorrichtung bereitgestellten Vorrats an Adapter-Steckern stets ein mit dem jeweiligen Ladesystem des Fahrzeugs kompatibler Adapter-Stecker bereitgehalten wird. Folglich entfällt die Notwendigkeit, wonach der Benutzer der Ladevorrichtung seinerseits eine Vielzahl von Adapter-Steckern mitführen muss, um sein elektrisch angetriebenes Fahrzeug mit der jeweiligen Ladevorrichtung zu koppeln. Das Fahrzeug kann mittels der erfindungsgemäßen Ladevorrichtung auf einfache Weise geladen werden, ohne dass bestimmte Ladesysteme vom Laden an der Ladevorrichtung ausgeschlossen sind. Das Adapter-Stecker-Magazin wird durch die Kommunikation mit dem Fahrzeug angesteuert, so dass dem Nutzer sofort der Adapter zur Verfügung steht.

Gemäß einem ersten Aspekt der Erfindung ist die Kommunikationsschnittstelle dazu eingerichtet, ladesystemspezifische Daten über ein zu ladendes Fahrzeug abzufragen und an die Steuereinheit weiterzuleiten, auf deren Basis die Steuereinheit einen Adapter-Stecker mit einer zweiten Adapterseite aus dem Adapter-Stecker-Magazin auswählt, die mit dem Ladesystem des zu ladenden Fahrzeugs kompatibel ist. Damit kann sichergestellt werden, dass ein zu dem Ladesystem des Fahrzeugs kompatibler Adapter-Stecker aus dem Vorrat von Adapter-Steckern automatisch ausgewählt wird, ohne dass ein Benutzer der Ladevorrichtung die Auswahl des passenden Adapter-Steckers treffen muss. Dies ermöglicht eine besonders schnelle und einfache Auswahl des Adapter-Steckers.

Unter ladesystemspezifischen Daten werden alle Daten verstanden, die relevant in Bezug den Ladevorgang sind. Beispielsweise Daten über das Ladesystem des Fahrzeugs, Daten über das Ladesystem der Ladevorrichtung, Daten über die Ladedauer und über den Ladezustand des Fahrzeugs.

Ein anderer Aspekt der Erfindung sieht vor, dass das Adapter-Stecker-Magazin mit einer Ausgabeeinheit gekoppelt ist, die dazu eingerichtet ist, einen Adapter-Stecker aus dem Adapter-Stecker-Magazin freizugeben, wenn die Steuereinheit den Adapter-Stecker ausgewählt hat. Vorteilhafterweise kann über die Ausgabeeinheit der durch die Steuereinheit ausgewählte Adapter-Stecker direkt aus der Ladevorrichtung entnommen werden. Diebstahl anderer Stecker wird damit vermieden.

Gemäß einer Variante der Erfindung ist die Ladevorrichtung als eine automatische Ladevorrichtung ausgeführt und weist einen motorisch verstellbaren Ladearm auf, der mit der Ausgabeeinheit in Eingriff bringbar und dazu eingerichtet ist, nach der Auswahl eines Adapter-Steckers durch die Steuereinheit mit der ersten Adapterseite des Adapter-Steckers zu koppeln und eine automatische Überführung des Adapter-Steckers aus der Ausgabeeinheit in die Lagerbuchse des zu ladenden Fahrzeugs zu bewirken. Damit kann das Fahrzeug über die zweite Adapterseite des Adapter-Steckers mit dem Ladearm elektrisch gekoppelt und geladen werden. Dadurch entfällt das manuelle Entnehmen des Adapter-Steckers aus der Ausgabeeinheit. Eine solche Ladevorrichtung ist vollautomatisch ausgeführt und in der Lage, ein zu ladendes Fahrzeug ohne manuelle Benutzerinteraktion mit der Ladevorrichtung zu koppeln und aufzuladen.

Gemäß einer anderen Variante ist es vorgesehen, dass die Ausgabeeinheit eingerichtet ist, den durch die Steuereinheit ausgewählten Adapter-Stecker einem Benutzer der Ladevorrichtung zur Verfügung zu stellen, sodass der Benutzer der Ladevorrichtung über den Adapter-Stecker das zu ladende Fahrzeug mit der Ladeschnittstelle der Ladevorrichtung elektrisch koppeln kann. In der vorliegenden Variante ist die Ladevorrichtung also manuell ausgeführt. Eine derartige Ladevorrichtung ist weniger wartungsaufwendig sowie weniger anfällig für technische Störungen bzw. Defekte.

In einer weiteren Ausführungsform ist es vorgesehen, dass die Kommunikationsschnittstelle als ein Touchdisplay, eine WLAN-Schnittstelle, eine NFC-Schnittstelle oder eine Bluetooth-Schnittstelle ausgeführt ist. Ist die Kommunikationsschnittstelle als ein Touchdisplay ausgeführt, kann vorteilhafterweise mit der Ladevorrichtung intuitiv und auf einfache Weise interagiert werden. Ist die Kommunikationsschnittstelle hingegen als eine WLAN-Schnittstelle, eine NFC- Schnittstelle oder eine Bluetooth-Schnittstelle ausgeführt, so kann die Kommunikation zwischen Fahrzeug und Ladevorrichtung direkt über eine Benutzerschnittstelle im Fahrzeugs erfolgen.

In einer weiteren Ausführungsform entspricht die zweite Adapterseite eines Adapter-Steckers einem Ladesystem, das ausgewählt ist aus der Gruppe bestehend aus Typ-1, Typ-2 Mennekes, CCS, Typ-F, CEE, ChadeMo und Tesla Supercharger sowie herstellerbedingte Eigenarten davon. Mit der vorgenannten Auswahl kann sichergestellt sein, dass eine große Vielzahl von Ladesystemen mit der Ladevorrichtung kompatibel ist.

Die erste Adapterseite ist zur Ladeschnittschnittstelle der Ladevorrichtung kompatibel und kann einem der oben genannten Ladesysteme entsprechen oder einer ladevorrichtungsspezifischen Eigenart.

Gemäß einem weiteren Aspekt ist die Ladevorrichtung eine stationäre Ladevorrichtung, insbesondere eine stationäre Ladesäule. Die Ausführung der Ladevorrichtung als eine stationäre Ladevorrichtung bzw. eine stationäre Ladesäule ist besonders vorteilhaft, da auf bekannte Spezifikationen zurückgegriffen werden kann.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Darstellung einer erfindungsgemäßen Ladevorrichtung,
- Figur 2 eine schematische Darstellung eines als ein Trommelmagazin ausgeführtes Adapter-Stecker-Magazin, das bei der Erfindung eingesetzt wird,
- Figur 3 eine schematische Darstellung eines als ein Umlaufsystem ausgeführten Adapter-Stecker-Magazins, das bei der Erfindung eingesetzt wird,
- Figur 4 eine schematische Darstellung der erfindungsgemäßen Ladevorrichtung aus Figur 1, die über ein Ladekabel mit einem elektrisch angetriebenen Fahrzeug verbunden ist, und
- Figur 5 eine schematische Darstellung der erfindungsgemäßen Ladevorrichtung aus Figur 1, die über einen motorisch verstellbaren Ladearm mit einem elektrisch angetriebenen Fahrzeug verbunden ist.

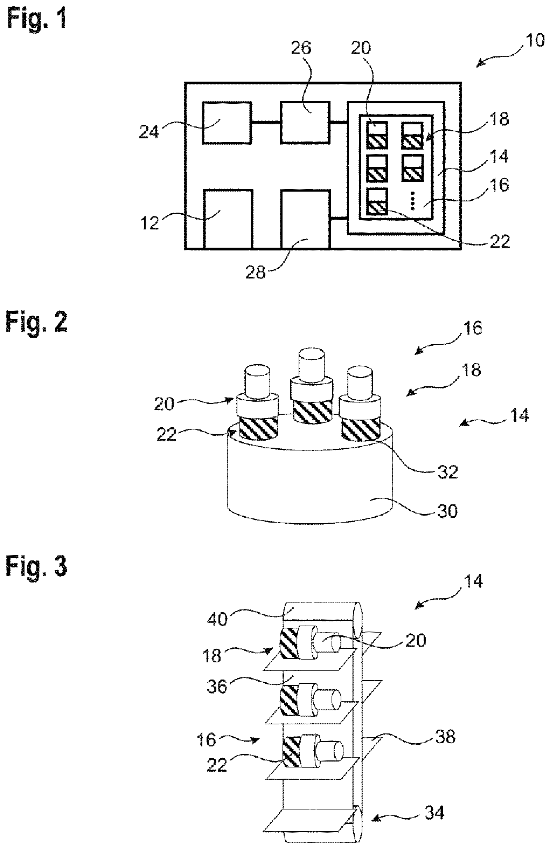

Figur 1 zeigt eine Ladevorrichtung 10 zum Laden von elektrisch angetriebenen Fahrzeugen.

Die Ladevorrichtung 10 weist eine Ladeschnittstelle 12 auf, die eingerichtet ist, die Ladevorrichtung 10 mit einer Ladebuchse eines elektrisch angetriebenen Fahrzeugs zu koppeln.

Ferner weist die Ladevorrichtung 10 ein Adapter-Stecker-Magazin 14 auf, das einen Vorrat 16 von mehreren Adapter-Steckern 18 beinhaltet. Unter einem Vorrat 16 von mehreren Adapter-Steckern 18 wird eine Vielzahl von verschiedenen Adapter-Steckern 18 verstanden.

Genauer betrachtet weist jeder der mehreren Adapter-Stecker 18 eine erste Adapterseite 20, die kompatibel zur Ladeschnittstelle 12 der Ladevorrichtung 10 ist, und eine zweite Adapterseite 22 auf, die kompatibel zu einem bestimmten Ladesystem für ein elektrisch angetriebenes Fahrzeug ist. Dabei weist jeder der mehreren Adapter-Stecker 18 eine von den anderen Adapter-Steckern 18 unterschiedliche zweite Adapterseite 22 auf. Vorteilhafterweise sind so viele Adapter-Stecker 18 in dem Vorrat 16 beinhaltet, dass für jedes bekannte Ladesystem auf dem Markt ein zugehöriger Adapter-Stecker 18 mit einer entsprechenden zweiten Adapterseite 22 im Vorrat 16 vorhanden ist.

Ferner weist die Ladevorrichtung 10 eine Kommunikationsschnittstelle 24 und eine Steuereinheit 26 auf, die beide informationsaustauschend miteinander verbunden sind. Die Steuereinheit 26 ist zudem mit dem Adapter-Stecker-Magazin 14 informationsaustauschend verbunden und eingerichtet, das Adapter-Stecker-Magazin 14 anzusteuern.

Die Kommunikationsschnittstelle 24 ist dazu eingerichtet, ladesystemspezifische Daten über ein zu ladendes Fahrzeug abzufragen und an die Steuereinheit 26 weiterzuleiten, auf deren Basis die Steuereinheit 26 einen Adapter-Stecker 18 mit der zweiten Adapterseite 22 aus dem Adapter-Stecker-Magazin 14 auswählt, die mit dem Ladesystem des zu ladenden Fahrzeugs kompatibel ist.

Darüber hinaus weist die Ladevorrichtung 10 eine Ausgabeeinheit 28 auf, die mit dem Adapter-Stecker-Magazin 14 gekoppelt und eingerichtet ist, einen Adapter-Stecker 18 aus dem Adapter-Stecker-Magazin 14 freizugeben, wenn die Steuereinheit 26 den Adapter-Stecker 18 ausgewählt hat.

In den Figuren 2 und 3 sind verschiedene Ausführungsformen für das Adapter-Stecker-Magazin 14 gezeigt.

In Figur 2 ist das Adapter-Stecker-Magazin 14 als ein Trommelmagazin 30 ausgeführt. Das Adapter-Stecker-Magazin 14 ist als ein rotierendes Trommelmagazin 30 ausgeführt, das eine Vielzahl von radial angeordneten Lagern 32 aufweist, wobei jedes Lager 32 mit jeweils einem Adapter-Stecker 18 bestückt ist.

Die Funktionsweise eines solchen als Trommelmagazin 30 ausgeführten Adapter-Stecker-Magazins 14 kann wie folgt beschrieben werden: Das Trommelmagazin 30 kann um eine zentrale Achse rotieren, wobei auch die in dem Trommelmagazin 30 bevorrateten Adapter-Stecker 18 rotierend bewegt werden. Wird über die Kommunikationsschnittstelle 24 das Ladesystem von einem zu ladenden Fahrzeug ermittelt, so kann die Steuereinheit 26 das als Trommelmagazin 30 ausgeführte Adapter-Stecker-Magazin 14 so ansteuern, dass das Adapter-Stecker-Magazin 14 rotiert, bis der für das Ladesystem des Fahrzeugs passende, also kompatible, Adapter-Stecker 18 über die Ausgabeeinheit 28 entnehmbar ist.

In Figur 3 ist das Adapter-Stecker-Magazin 14 als ein Umlaufsystem 34 ausgeführt. Ein solches Umlaufsystem 34 kann auch als ein Paternosteraufzug bezeichnet werden.

Das Umlaufsystem 34 weist eine umlaufende Schleppverbindung 36 auf, an der eine Vielzahl von Ebenen 38 angehängt sind. Die Schleppverbindung 36 kann als ein Schleppband, eine Schleppkette oder ein Schleppseil ausgebildet sein. Die Mehrzahl von Ebenen 38 wird durch die Schleppverbindung 36 in Umlaufrichtung mitgeführt. Die Schleppverbindung 36 kann durch wenigstens eine Antriebsvorrichtung 40 in Umlaufrichtung bewegt werden, wodurch auch die Ebenen 38 mitgeführt werden. Im vorliegenden Fall sind zwei Antriebsvorrichtungen 40 vorgesehen.

Auf der Vielzahl von Ebenen 38 ist der Vorrat 16 der mehreren Adapter-Stecker 18 vorgesehen. Insbesondere ist jede Ebene 38 mit jeweils einem Adapter-Stecker 18 bestückt.

Das Umlaufsystem 34 weist eine gemeinsame Entnahme- und Beschickungsöffnung (hier nicht gezeigt) zur Entnahme und Beschickung der Adapter-Stecker auf.

Ein derartiges Umlaufsystem kann in seiner Funktionsweise wie folgt beschrieben werden: Die auf den Ebenen 38 gelagerten Adapter-Stecker 18 können in Umlaufrichtung bewegt werden. Wird über die Kommunikationsschnittstelle 24 das Ladesystem eines zu ladenden Fahrzeugs abgefragt und diese Information an die Steuereinheit 26 weitergegeben, die daraufhin einen passenden Adapter-Stecker 18 aus dem Vorrat 16 auswählt, wird das Umlaufsystem 34 so lange in Umlaufrichtung bewegt, bis der ausgewählte Adapter-Stecker 18 zur gemeinsamen Entnahme und Beschickungsöffnung gelangt und dort über die Ausgabeeinheit 28 entnommen werden kann.

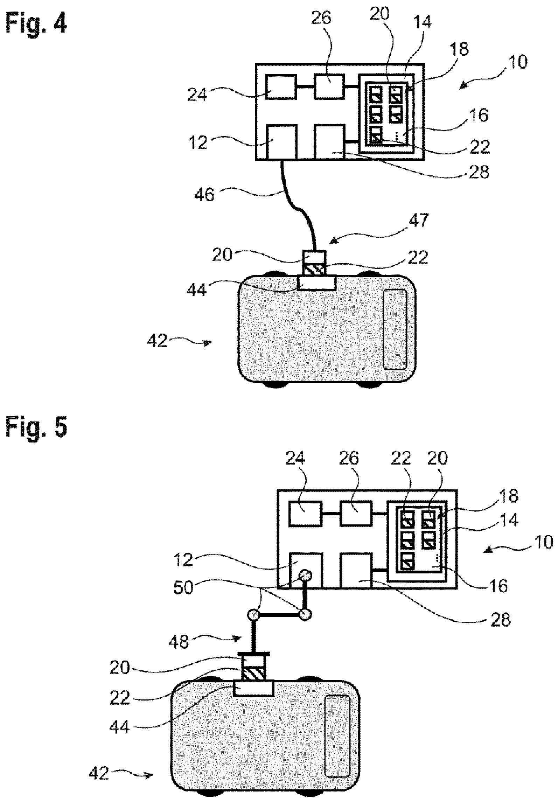

Figur 4 zeigt die Ladevorrichtung 10 aus Figur 1, wobei die Ladeschnittstelle 12 mit einem elektrisch angetriebenen Fahrzeug 42 gekoppelt ist. Bei den elektrisch angetriebenen Fahrzeugen kann es sich um ein vollelektrisch angetriebenes Fahrzeug oder um ein Hybridfahrzeug handeln.

Genauer betrachtet ist die Ladeschnittstelle 12 über ein Ladekabel 46 elektrisch mit dem Fahrzeug 42 verbunden ist. Das Ladekabel 46 kann entweder Teil der Ladevorrichtung 10 sein oder mit dieser über eine Stecker-Buchse-Verbindung verbunden sein. Das Ladekabel 46 weist zudem ein fahrzeugseitiges Ende 47 auf, über das es mit dem Fahrzeug 42 gekoppelt werden kann. Dazu ist das fahrzeugseitige Ende 47 des Ladekabels 46 mit der ersten Adapterseite 20 eines Adapter-Steckers 18 elektrisch gekoppelt, wobei die zweite Adapterseite 22 des in Rede stehenden Adapter-Steckers 18 mit einer Ladebuchse 44 des Fahrzeugs 42 gekoppelt ist.

Figur 5 zeigt die gleiche Anordnung wie bereits in Figur 4 beschrieben, mit dem Unterschied, dass anstelle eines Ladekabels 46 ein motorisch verstellbarer Ladearm 48 vorgesehen ist.

Der Ladearm 48 weist mehrere Gelenke 50 auf, die eine motorische Verstellbarkeit des Arms ermöglichen. Im vorliegenden Fall sind z. B. drei Gelenke 50 vorgesehen.

Folglich ist die gezeigte Ladevorrichtung 10 als eine automatische Ladevorrichtung 10 ausgeführt. Der motorisch verstellbare Ladearm 48 ist mit der Ausgabeeinheit 28 in Eingriff bringbar und dazu eingerichtet, nach der Auswahl eines Adapter-Steckers 18 durch die Steuereinheit 26 mit der ersten Adapterseite 20 des Adapter-Steckers 18 zu koppeln und eine automatische Überführung des Adapter-Steckers 18 aus der Ausgabeeinheit 28 in die Ladebuchse 44 des zu ladenden Fahrzeugs 42 zu bewirken, sodass das Fahrzeug 42 über die zweite Adapterseite 22 des Adapter-Steckers 18 mit dem Ladearm 48 elektrisch gekoppelt und geladen werden kann.

Nachfolgend wird beispielhaft ein Ladevorgang mit einer erfindungsgemäßen Ladevorrichtung 10 beschrieben, der nicht in einem einschränkenden Sinn auszulegen ist.

Ein elektrisch angetriebenes und zu ladendes Fahrzeug 42 nähert sich der Ladevorrichtung 10. Zunächst werden über die Kommunikationsschnittstelle 24 ladesystemspezifische Daten über das zu ladende Fahrzeug 42 abgefragt und an die Steuereinheit 26 weitergeleitet. Damit wird das Fahrzeug 42 von der Ladevorrichtung 10 identifiziert, wobei insbesondere das Ladesystem des Fahrzeugs 42 von der Kommunikationsschnittstelle 24 abgefragt wird.

Mit den durch die Kommunikationsschnittstelle 24 ermittelten Informationen wählt die Steuereinheit 26 aus dem Adapter-Stecker-Magazin 14 einen zum Fahrzeug 42 kompatiblen Adapter-Stecker 18 aus, wobei die zweite Adapterseite 22 des ausgewählten Adapter-Steckers 18 kompatibel zu dem Ladesystem des elektrisch angetriebenen Fahrzeugs 42 ist. Der Adapter-Stecker 18 kann über die Ausgabeeinheit 28 freigegeben werden.

Danach kann der Adapter-Stecker 18 aus der Ausgabeeinheit 28 entweder manuell von einem Benutzer der Ladevorrichtung entnommen werden, mit der ersten Adapterseite 20 auf das fahrzeugseitige Ende 47 eines Ladekabels 46 aufgesteckt und anschließend über die zweite Adapterseite 22 mit der Ladebuchse 44 des Fahrzeugs 42 gekoppelt werden oder, ein motorisch verstellbarer Ladearm 48 kann den Adapter-Stecker 18 aus der Ausgabeeinheit 28 entnehmen und sich über diesen mit der Ladebuchse 44 des Fahrzeugs 42 verbinden.

In beiden Fällen ist die Ladevorrichtung 10 sequentiell über die Ladeschnittstelle 12, wahlweise ein Ladekabel 46 oder einen Ladearm 48, den Adapter-Stecker 18 und der Ladebuchse 44 mit dem Fahrzeugs 42 gekoppelt. Nach erfolgreicher Koppelung kann der Ladevorgang erfolgen.

## Patentansprüche

1. Ladevorrichtung (10) zum Laden von elektrisch angetriebenen, Lasten und/oder Personen befördernden Fahrzeugen (42), mit einer Ladeschnittstelle (12) zum Koppeln der Ladevorrichtung (10) mit einer Ladebuchse (44) eines elektrisch angetriebenen Fahrzeugs (42), einer Kommunikationsschnittstelle (24) zur Identifikation des Fahrzeugs (42), einem Adapter-Stecker-Magazin (14), das einen Vorrat (16) von mehreren Adapter-Steckern (18) beinhaltet, und einer Steuereinheit (26), die informationsaustauschend mit der Kommunikationsschnittstelle (24) und dem Adapter-Stecker-Magazin (14) verbunden und eingerichtet ist, das Adapter-Stecker-Magazin (14) anzusteuern,
wobei jeder der mehreren Adapter-Stecker (18) eine erste Adapterseite (20), die kompatibel zur Ladeschnittstelle (12) der Ladevorrichtung (10) ist, und eine zweite Adapterseite (22) aufweist, die kompatibel zu einem bestimmten Ladesystem für ein elektrisch angetriebenes Fahrzeug (42) ist, wobei jeder der mehreren Adapter-Stecker (18) eine von den anderen Adapter-Steckern (18) unterschiedliche zweite Adapterseite (22) aufweist, **dadurch gekennzeichnet, dass** das Adapter-Stecker-Magazin (14) als ein rotierendes Trommelmagazin (30) oder ein Umlaufsystem (34) ausgeführt ist,
wobei das rotierende Trommelmagazin (30) eine Vielzahl von radial angeordneten Lagern (32) aufweist, wobei jedes Lager (32) jeweils mit einem Adapter-Stecker (18) der mehreren Adapter-Stecker (18) bestückt ist, und
wobei das Umlaufsystem (34) eine Vielzahl von Ebenen (38) aufweist, die um eine zentrale Achse rotieren, wobei jede Ebene (38) mit jeweils einem Adapter-Stecker (18) der mehreren Adapter-Stecker (18) bestückt ist, und wobei das Umlaufsystem (34) eine gemeinsame Entnahme- und Beschickungsöffnung zur Entnahme und Beschickung der Adapter-Stecker (18) aufweist.

2. Ladevorrichtung (10) nach Anspruch 1, **dadurch gekennzeichnet, dass** die Kommunikationsschnittstelle (24) dazu eingerichtet ist, ladesystemspezifische Daten über ein zu ladendes Fahrzeug (42) abzufragen und an die Steuereinheit (26) weiterzuleiten, auf deren Basis die Steuereinheit (26) einen Adapter-Stecker (18) an einer zweiten Adapterseite (22) aus dem Adapter-Stecker-Magazin (14) auswählt, die mit dem Ladesystem des zu ladenden Fahrzeugs (42) kompatibel ist.

3. Ladevorrichtung (10) nach Anspruch 2, **dadurch gekennzeichnet, dass** das Adapter-Stecker-Magazin (14) mit einer Ausgabeeinheit (28) gekoppelt ist, die dazu eingerichtet ist, einen Adapter-Stecker (18) aus dem Adapter-Stecker-Magazin (14) freizugeben, wenn die Steuereinheit (26) den Adapter-Stecker (18) ausgewählt hat.

4. Ladevorrichtung (10) nach Anspruch 3, **dadurch gekennzeichnet, dass** die Ladevorrichtung (10) als eine automatische Ladevorrichtung (10) ausgeführt ist und einen motorisch verstellbaren Ladearm (48) aufweist, der mit der Ausgabeeinheit (28) in Eingriff bringbar und dazu eingerichtet ist, nach der Auswahl eines Adapter-Steckers (18) durch die Steuereinheit (26) mit der ersten Adapterseite (20) des Adapter-Steckers (18) zu koppeln und eine automatische Überführung des Adapter-Steckers (18) aus der Ausgabeeinheit (28) in die Ladebuchse (44) des zu ladenden Fahrzeugs (42) zu bewirken, so dass das Fahrzeug (42) über die zweite Adapterseite (22) des Adapter-Steckers (18) mit dem Ladearm (48) elektrisch gekoppelt und geladen werden kann.

5. Ladevorrichtung (10) nach Anspruch 3, **dadurch gekennzeichnet, dass** die Ausgabeeinheit (28) eingerichtet ist, den durch die Steuereinheit (26) ausgewählten Adapter-Stecker (18) dem Benutzer der Ladevorrichtung zur Verfügung zu stellen, so dass der Benutzer der Ladevorrichtung über den Adapter-Stecker (18) das zu ladende Fahrzeug mit der Ladeschnittstelle (12) der Ladevorrichtung (10) elektrisch koppeln kann.

6. Ladevorrichtung (10) nach einem der vorhergehenden Ansprüche, **dadurch gekennzeichnet, dass** die Kommunikationsschnittstelle (24) als ein Touchdisplay, eine WLAN-Schnittstelle, eine NFC-Schnittstelle oder eine Bluetooth-Schnittstelle ausgeführt ist.

7. Ladevorrichtung (10) nach einem der vorhergehenden Ansprüche, **dadurch gekennzeichnet, dass** die zweite Adapterseite (22) eines Adapter-Steckers (18) einem Ladesystem entspricht, das ausgewählt ist aus der Gruppe bestehend aus Typ-1, Typ-2 Mennekes, CCS, Typ-F, CEE, ChadeMo und Tesla Supercharger sowie herstellerbedingte Eigenarten davon.

8. Ladevorrichtung (10) nach einem der vorhergehenden Ansprüche, **dadurch gekennzeichnet, dass** die Ladevorrichtung (10) eine stationäre Ladevorrichtung (10) ist, insbesondere wobei es sich bei der Ladevorrichtung (10) um eine stationäre Ladesäule handelt.

## Claims

1. Charging device (10) for charging electrically driven vehicles (42) transporting loads and/or persons, comprising a charging interface (12) for coupling the charging device (10) with a charging socket (44) of an electrically driven vehicle (42), a communication interface (24) for identification of the vehicle (42), an adapter plug magazine (14) that contains a supply (16) of several adapter plugs (18), and a control unit (26) that is connected to the communication interface (24) and the adapter plug magazine (14) in an information-exchanging manner and is configured to control the adapter plug magazine (14),
wherein each of the several adapter plugs (18) has a first adapter side (20) that is compatible with the charging interface (12) of the charging device (10), and a second adapter side (22) that is compatible with a specific charging system for an electrically driven vehicle (42),
wherein each of the several adapter plugs (18) has a second adapter side (22) that differs from the other adapter plugs (18), **characterized in that** the adapter plug magazine (14) is designed as a rotating drum magazine (30) or a circulation system (34),
wherein the rotating drum magazine (30) has a plurality of radially arranged bearings (32), wherein each bearing (32) is equipped with one adapter plug (18) of the several adapter plugs (18), and
wherein the circulation system (34) has a plurality of levels (38) that rotate around a central axis, wherein each level (38) is equipped with one adapter plug (18) of the several adapter plugs (18), and wherein the circulation system (34) has a common removal and loading opening for removal and loading of the adapter plugs (18).

2. Charging device (10) according to claim 1, **characterized in that** the communication interface (24) is configured to retrieve charging-system-specific data about a vehicle (42) to be charged and to forward it to the control unit (26), on the basis of which the control unit (26) selects an adapter plug (18) with a second adapter side (22) from the adapter plug magazine (14) that is compatible with the charging system of the vehicle (42) to be charged.

3. Charging device (10) according to claim 2, **characterized in that** the adapter plug magazine (14) is coupled to a dispensing unit (28) that is configured to release an adapter plug (18) from the adapter plug magazine (14) when the control unit (26) has selected the adapter plug (18).

4. Charging device (10) according to claim 3, **characterized in that** the charging device (10) is designed as an automatic charging device (10) and has a motor-adjustable charging arm (48) that can be brought into engagement with the dispensing unit (28) and is configured, after selection of an adapter plug (18) by the control unit (26), to couple with the first adapter side (20) of the adapter plug (18) and to effect an automatic transfer of the adapter plug (18) from the dispensing unit (28) into the charging socket (44) of the vehicle (42) to be charged, so that the vehicle (42) can be electrically coupled and charged via the second adapter side (22) of the adapter plug (18) with the charging arm (48).

5. Charging device (10) according to claim 3, **characterized in that** the dispensing unit (28) is configured to make the adapter plug (18) selected by the control unit (26) available to the user of the charging device, so that the user of the charging device can electrically couple the vehicle to be charged with the charging interface (12) of the charging device (10) via the adapter plug (18).

6. Charging device (10) according to one of the preceding claims, **characterized in that** the communication interface (24) is designed as a touch display, a WLAN interface, an NFC interface or a Bluetooth interface.

7. Charging device (10) according to one of the preceding claims, **characterized in that** the second adapter side (22) of an adapter plug (18) corresponds to a charging system that is selected from the group consisting of Type 1, Type 2 Mennekes, CCS, Type F, CEE, ChadeMo and Tesla Supercharger as well as manufacturer-specific variations thereof.

8. Charging device (10) according to one of the preceding claims, **characterized in that** the charging device (10) is a stationary charging device (10), in particular wherein the charging device (10) is a stationary charging station.

## Revendications

1. Dispositif de charge (10) pour charger des véhicules (42) à propulsion électrique transportant des charges et/ou des personnes, comprenant une interface de charge (12) pour coupler le dispositif de charge (10) avec une prise de charge (44) d'un véhicule (42) à propulsion électrique, une interface de communication (24) pour l'identification du véhicule (42), un magasin de prises adaptateurs (14) qui contient une réserve (16) de plusieurs prises adaptateurs (18), et une unité de commande (26) qui est reliée de manière à échanger des informations avec l'interface de communication (24) et le magasin de prises adaptateurs (14) et est configurée pour commander le magasin de prises adaptateurs (14),
dans lequel chacune des plusieurs prises adaptateurs (18) présente un premier côté adaptateur (20) qui est compatible avec l'interface de charge (12) du dispositif de charge (10), et un deuxième côté adaptateur (22) qui est compatible avec un système de charge spécifique pour un véhicule (42) à propulsion électrique, dans lequel chacune des plusieurs prises adaptateurs (18) présente un deuxième côté adaptateur (22) qui diffère des autres prises adaptateurs (18), **caractérisé en ce que** le magasin de prises adaptateurs (14) est conçu comme un magasin à tambour rotatif (30) ou un système de circulation (34),
dans lequel le magasin à tambour rotatif (30) présente une pluralité de logements (32) disposés radialement, dans lequel chaque logement (32) est équipé d'une prise adaptateur (18) des plusieurs prises adaptateurs (18), et
dans lequel le système de circulation (34) présente une pluralité de niveaux (38) qui tournent autour d'un axe central, dans lequel chaque niveau (38) est équipé d'une prise adaptateur (18) des plusieurs prises adaptateurs (18), et dans lequel le système de circulation (34) présente une ouverture commune de retrait et de chargement pour le retrait et le chargement des prises adaptateurs (18).

2. Dispositif de charge (10) selon la revendication 1, **caractérisé en ce que** l'interface de communication (24) est configurée pour interroger des données spécifiques au système de charge concernant un véhicule (42) à charger et les transmettre à l'unité de commande (26), sur la base desquelles l'unité de commande (26) sélectionne une prise adaptateur (18) avec un deuxième côté adaptateur (22) dans le magasin de prises adaptateurs (14) qui est compatible avec le système de charge du véhicule (42) à charger.

3. Dispositif de charge (10) selon la revendication 2, **caractérisé en ce que** le magasin de prises adaptateurs (14) est couplé à une unité de distribution (28) qui est configurée pour libérer une prise adaptateur (18) du magasin de prises adaptateurs (14) lorsque l'unité de commande (26) a sélectionné la prise adaptateur (18).

4. Dispositif de charge (10) selon la revendication 3, **caractérisé en ce que** le dispositif de charge (10) est conçu comme un dispositif de charge automatique (10) et présente un bras de charge (48) réglable par moteur qui peut être amené en prise avec l'unité de distribution (28) et est configuré, après la sélection d'une prise adaptateur (18) par l'unité de commande (26), pour se coupler avec le premier côté adaptateur (20) de la prise adaptateur (18) et pour effectuer un transfert automatique de la prise adaptateur (18) de l'unité de distribution (28) dans la prise de charge (44) du véhicule (42) à charger, de sorte que le véhicule (42) peut être couplé électriquement et chargé via le deuxième côté adaptateur (22) de la prise adaptateur (18) avec le bras de charge (48).

5. Dispositif de charge (10) selon la revendication 3, **caractérisé en ce que** l'unité de distribution (28) est configurée pour mettre la prise adaptateur (18) sélectionnée par l'unité de commande (26) à la disposition de l'utilisateur du dispositif de charge, de sorte que l'utilisateur du dispositif de charge peut coupler électriquement le véhicule à charger avec l'interface de charge (12) du dispositif de charge (10) via la prise adaptateur (18).

6. Dispositif de charge (10) selon l'une des revendications précédentes, **caractérisé en ce que** l'interface de communication (24) est conçue comme un écran tactile, une interface WLAN, une interface NFC ou une interface Bluetooth.

7. Dispositif de charge (10) selon l'une des revendications précédentes, **caractérisé en ce que** le deuxième côté adaptateur (22) d'une prise adaptateur (18) correspond à un système de charge qui est sélectionné dans le groupe constitué de Type 1, Type 2 Mennekes, CCS, Type F, CEE, ChadeMo et Tesla Supercharger ainsi que des variantes spécifiques au fabricant de ceux-ci.

8. Dispositif de charge (10) selon l'une des revendications précédentes, **caractérisé en ce que** le dispositif de charge (10) est un dispositif de charge stationnaire (10), en particulier dans lequel le dispositif de charge (10) est une borne de charge stationnaire.
